# EUROPÄISCHE PATENTSCHRIFT

(11) **EP 0 589 085 B1**
(45) Veröffentlichungstag und Bekanntmachung des Hinweises auf die Patenterteilung: **19.11.1997**
(21) Anmeldenummer: 92116388.7
(22) Anmeldetag: 24.09.1992
(51) Int. Cl.: H04Q 1/39, H04Q 3/62, H04M 7/00

(54) **Teilnehmeranschlusssatz für den Anschluss einer Fernsprech-Nebenstellenanlage an eine öffentliche Fernsprechvermittlungsstelle**
Subscriber connection unit for connecting a PBX to a public telephone exchange
Unité de raccordement d'abonnés pour le raccordement d'un PBX à un système publique de téléphone

(43) Veröffentlichungstag der Anmeldung: 30.03.1994
(73) Patentinhaber: SIEMENS AKTIENGESELLSCHAFT, 80333 München (DE)
(72) Erfinder: Bronold, Josef, Dipl.-Ing. FH, W-8034 Germering (DE); Kovar, Kurt, Ing. (grad.), W-8037 Olching (DE)

(56) Entgegenhaltungen:
- EP-A- 0 134 886
- DE-A- 2 843 159
- DE-A- 3 112 549
- HASLER MITTEILUNGEN Bd. 2/3, September 1985, BERN, CH Seiten 29 - 47 L.GIRARD ET AL. 'Das Hauskommunikationssystem SL-1'

## Beschreibung

Die Erfindung betrifft einen Teilnehmeranschlußsatz für den Anschluß einer Fernsprechnebenstellenanlage an eine öffentliche Fernsprechvermittlungsstelle gemäß dem Oberbegriff des Patentanspruchs 1.

Es handelt sich demnach um einen Teilnehmeranschlußsatz für eine Nebenstellenanlage, bei der eine Durchwahl möglich ist, also von einem Teilnehmerendgerät der Nebenstellenanlage aus direkt ein an die öffentliche Vermittlungsstelle angeschlossenes Teilnehmerendgerät angewählt werden kann, und umgekehrt eine direkte Anwahl wenigstens eines Teils der Endgeräte der Nebenstellenanlage von der öffentlichen Fernsprechvermittlungsstelle aus möglich ist.

Die Aufgabe eines solchen Teilnehmersatzes besteht im wesentlichen darin, für die Signal- und Sprachübertragung zwischen öffentlicher Vermittlungsstelle und Nebenstellenanlage zu sorgen. Es ist dabei vorausgesetzt, daß zwischen dem Teilnehmeranschlußsatz, im folgenden Durchwahlsatz genannt, und der Nebenstellenanlage eine Signalisierung nach dem IKZ-Verfahren (Impuls-Kennzeichen-Signalisierung) stattfindet. Es handelt sich hierbei um ein Gleichstromzeichengabeverfahren, bei dem die Zeichengabe durch symmetrische Leitungszeichen (z.B. Schleifenschluß) und unsymmetrische Leitungszeichen (z.B. Erde auf der a- oder b-Ader) erfolgt. Es müssen in diesem Zusammenhang spezielle Stromquellen, Abschlußwiderstände und Leitungszustandsindikatoren in wechselnden Kombinationen an die Adern der Teilnehmeranschlußleitung angeschaltet werden. In die Teilnehmeranschlußleitung sind über den Durchwahlsatz Hörtöne, Gebührenimpulse und der Auslöseimpuls einzuspeisen.

Weitere Forderungen an den Betrieb des Durchwahlsatzes sind die Gewährleistung einer symmetrischen Sprachübertragung, wobei sich Sprachübertragung und Signalisierung gegenseitig nicht beeinflussen dürfen. Es ist ferner zu fordern, daß Sprachübertragung und Signalisierung unterhalb einer vorgegebenen Schwelle von eingekoppelten Störspannungen nicht beeinflußt werden. Schließlich sollen Bauelemente, die überspannungs- und überstromempfindlich sind, vor Beschädigungen geschützt werden.

Bei den bisherigen Durchwahlsätzen wurden die erwähnten Stromquellen, Abschlußwiderstände und Indikatoren einzeln an eine Schiene der a- und b-Adern der Teilnehmeranschlußleitung angeschlossen. Um den obenstehenden Forderungen nach Symmetrie bei der Sprachübertragung gerecht zu werden, erfolgte dabei die Anschaltung mittels Relais. Die Stromquellen wurden von Widerständen gebildet, die für den Fehlerfall überlastungsfest ausgebildet waren. Ein solcher Durchwahlsatz erforderte somit große und teure Bauelemente und wies eine relativ hohe Verlustleistung auf.

Die Aufgabe der Erfindung besteht darin, einen Durchwahlsatz der eingangs genannten Art anzugeben, der bezüglich der Baugröße, des Kostenaufwands und der Verlustleistung günstiger ist als Durchwahlsätze der vorerwähnten bekannten Bauart.

Diese Aufgabe wird mittels der im Kennzeichen des Patentanspruchs 1 angegebenen Merkmale gelöst.

Demnach sind bei dem erfindungsgemäßen Durchwahlsatz zwei Gruppen von Signalisierungselementen gebildet, nämlich eine erste Gruppe, die die Signalisierungslemente enthält, die mit der unsymmetrischen Signalisierung in Verbindung stehen und solche sind, die bei der Sprachübertragung keine Funktion erfüllen, sowie eine zweite Gruppe von Signalisierungselementen, der die mit der symmetrischen Signalisierung in Zusammenhang stehenden Signalisierungelemente angehören und die bei der Sprachübertragung mitwirken. Beide Gruppen sind jeweils mittels eines Relais an die mit der Nebenstellenanlage verbindende Teilnehmeranschlußschleitung anschaltbar. Aufgrund dieser Struktur ist es möglich, zur Anschaltung eines Teils der Signalisierungselemente elektronische Schalter zu verwenden, so daß gegenüber den Verhältnissen bei bekannten Durchwahlsätzen die Anzahl der benötigten Relais erheblich reduziert werden kann. Die Signalisierungselemente, sofern sie Stromquellen sind, lassen sich mittels elektronischer Stromquellen realisieren. Beide der vorgenannten Möglichkeiten führen zu wesentlich reduziertem Platzbedarf und verringerter Verlustleistung. Die erfindungsgemäße Struktur eröffnet ferner die Möglichkeit, einen zentralisierten Überspannungs- und Überstromschutz der Elektronik vorzusehen, womit die Notwendigkeit, mit überlastungsfesten Bauelementen zu arbeiten, entfällt.

Weitere Ausgestaltungen der Erfindung sind in den Unteransprüchen gekennzeichnet.

Nachstehend wird die Erfindung anhand eines Ausführungsbeispieles unter Bezugnahme auf eine Zeichnung näher erläutert. In der Zeichnung zeigen:
FIG 1 die Struktur einer öffentlichen Fernsprechvermittlungsanlage, deren Bestandteil der erfindungsgemäße Durchwahlsatz ist,
FIG 2 einen Teil des erfindungsgemäßen Durchwahlsatzes,
FIG 3 einen Teil eines Durchwahlsatzes der oben besprochenen bisherigen Struktur.

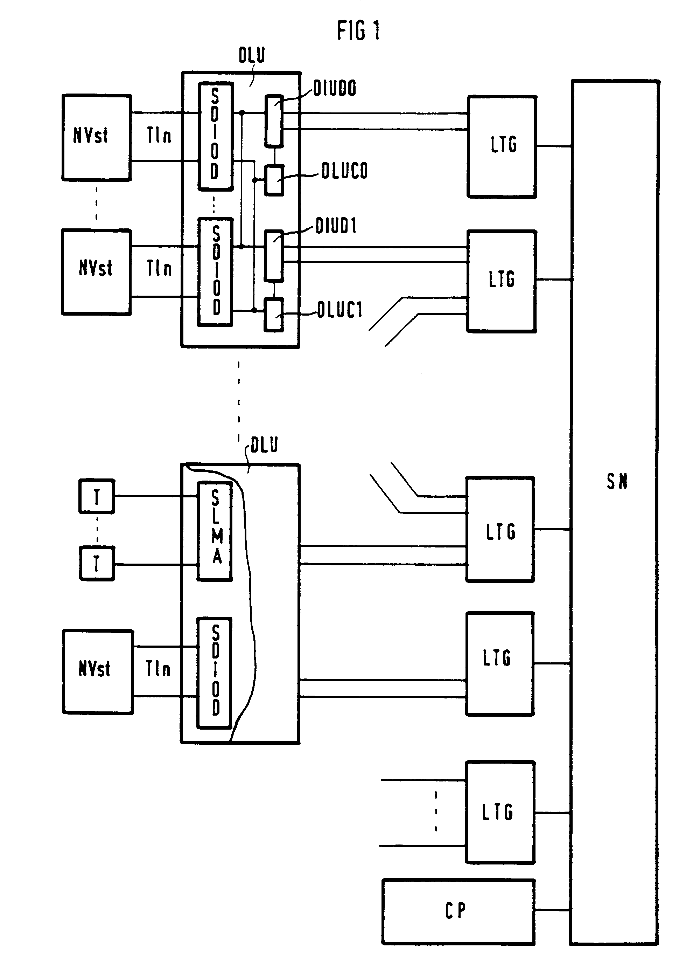

Die FIG 1 zeigt als zentrale Teile einer öffentlichen Fernsprechvermittlungsstelle ein zentrales Koppelnetz SN sowie einen zentralen Koordinationsprozessor CP.

Zur Peripherie dieser Vertmittlungsstelle gehören Anschlußgruppen LTG, die die Schnittstelle zwischen der digitalen Umgebung der Vermittlungsstelle und dem zentralen Koppelnetz SN bilden. Diese Anschlußgruppen können wie im dargestellten Fall mit einer digitalen Übertragungsstrecke beschaltet sein, die sie mit einer digitalen Teilnehmerleitungseinheit DLU verbindet. Sie können aber auch mit digitalen Verbindungsleitungen beschaltet sein, die eine Verbindung zu anderen öffentlichen Vermittlungsstellen herstellen. Weitere Anschlußmöglichkeiten sind ein Primärmultiplexanschluß für mittlere und große ISDN-Nebenstellenanlagen, sowie digitale Anschlußleitungen für Digital-Vermittlungsplätze.

Die ebenfalls zur Peripherie gehörenden erwähnten digitalen Teilnehmerleitungseinheiten DLU dienen dem Anschluß entweder von Teilnehmerleitungen, die Verbindungen zu analogen Endgeräten herstellen oder, wie im dargestellten Fall, zum Anschluß von Teilnehmerleitungen, die der Verbindung mit mittleren und kleinen Nebenstellenanlagen NVst dienen. Die digitalen Teilnehmerleitungseinheiten DLU können lokal innerhalb der Vermittlungsstelle oder abgesetzt von der Vermittlungsstelle angeordnet sein.

Die digitalen Teilnehmerleitungseinheiten DLU umfassen neben gedoppelten Steuereinheiten DLUC Schnittstelleneinheiten DIUD, sowie die eigentlichen Teilnehmeranschlußsätze, bei denen es sich im dargestellten Fall des Anschlusses von Nebenstellen mit Durchwahl um Durchwahlsätze S:DIOD handelt.

Ein solcher Durchwahlsatz dient dem Anschluß von bis zu vier mit einer Nebenstelle NVst verbindenden Teilnehmeranschlußleitungen Tln.

Die wesentlichen Aufgaben eines solchen Durchwahlsatzes sind die Überwachung der Teilnehmeranschlußleitungen zur Nebenstellenanlage (Leitungsindikation), die Signalisierung zwischen der Nebenstellenanlage und der digitalen Teilnehmerleitungseinheit, das Senden und die Aufnahme von Impulswahlzeichen und die Zeichenvorverarbeitung, die Erzeugung und das Senden von 16 kHz Zählimpulsen, das Erzeugen und Senden von Auslöseimpulsen, das Anschalten an eine Prüfeinheit, die programmierbare Einstellung übertragungstechnischer Eigenschaften, die Zweidraht-Vierdraht-Umsetzung, die Gleichspannungsentkopplung der Sprachsignale, die Analog-Digital-Wandlung und die Digital-Analog-Wandlung der Sprachsignale, die Sprachübertragung über eine Sprachschnittstelle und der Signalaustausch über eine Signalschnittstelle.

Im Zusammenhang mit der Erfindung interessieren im wesentlichen die Vorgänge bei der vorerwähnten Signalisierung zwischen Nebenstellenanlage und digitaler Teilnehmerleitungseinheit DLU.

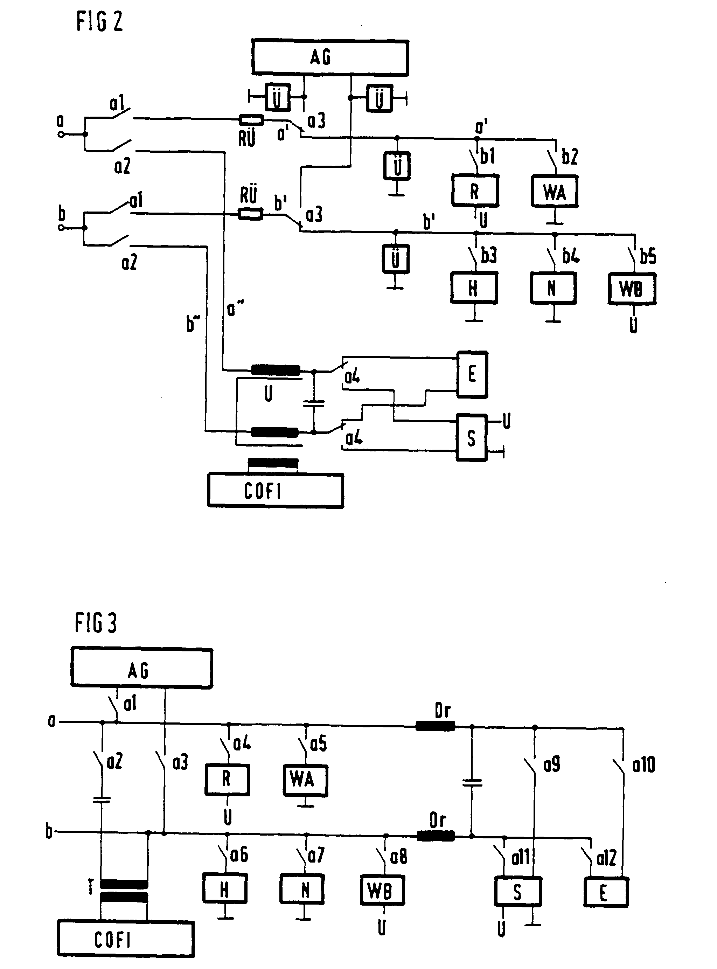

Die FIG 3 zeigt die Struktur eines Durchwahlsatzes der bisher üblichen Art im Hinblick auf die Signalisierung.

Wie schon angegeben, erfolgt die Signalisierung gemäß dem IKZ-Signalisierungsverfahren (Impuls-Kennzeichen-Signalisierungsverfahren), bei dem es sich um ein Gleichstromzeichengabeverfahren handelt, bei dem sowohl symmetrische als auch unsymmetrische Leitungszeichen vorkommen.

Bei der unsymmetrischen Leitungssignalisierung wird die Signalisierinformation durch Anlegen von negativem Potential oder von Erdpotential entweder über die a-Ader oder über die b-Ader der mit der Nebenstellenanlage verbindenden Teilnehmeranschlußleitung Tln vorgenommen.

Im Zusammenhang mit der unsymmetrischen Signalisierung erfolgt die Leitungsüberwachung, das Belegen der Nebenstellenanlage und die Ziffernübertragung zur Nebenstellenanlage. So ist zur Überwachung der zur Nebenstellenanlage führenden Teilnehmeranschlußleitung im Ruhezustand ein R-Indikator R vorgesehen, der mittels eines Schalters a4 an die a-Ader gelegt wird, wodurch auch das Überwachungspotential U an der a-Ader liegt. Wenn die Nebenstellenanlage bei gehender Belegung. d.h. also von ihr ausgehender Belegung Erdpotential an die a-Ader legt, ändert der R-Indikator sein Potential. Über den Schalter a6 wird der H-Indikator H und damit auch Erdpotential an die b-Ader gelegt, woraufhin der H-Indikator H im Ruhezustand das Überwachungspotential auf der b-Ader erkennt.

Über einen Schalter a7 wird der N-Indikator N und damit auch Belegungspotential in Form von Erdpotential an die b-Ader gelegt. Wenn daraufhin die Nebenstellenanlage das Überwachungspotential von der b-Ader entfernt, erkennt der N-Indikator den Wechsel der Potentiale auf der b-Ader.

Durch den Wahlimpulsgeber WA bzw. über den Schalter a5 werden Wahlimpulse auf die a-Ader gelegt.

Zum Senden eines Fernkennzeichens wird mittels des Fernzeichengebers WB bzw. über den Schalter a8 ein Fernzeichenimpulspotential an die b-Ader gelegt.

Im Zusammenhang mit der symmetrischen Signalisierung werden zwischen die a- und die b-Ader Widerstände und Empfänger für Rückwärtszeichen, d.h. entgegen der Verbindungsaufbaurichtung gesendete Zeichen geschaltet oder aber es wird Speisespannung an die Leitungsadern angelegt. Zum Erkennen von Rückwärtszeichen im kommenden Verkehr wird mit dem Anschalten eines E-Indikators E über die Schalter a10 und a12 ein Schleifenwiderstand zwischen die a- und die b-Ader geschaltet.

Ein S-Indikator S, der mittels der Schalter a9 und a11 an die a-Ader bzw. die b-Ader angeschaltet wird, erkennt Schleifenschluß in der Nebenstellenanlage im gehenden Verkehr. Er sorgt daraufhin für das Anlegen der Speisespannung an die Nebenstellenanlage, indem negatives Potential U an die b-Ader und Erdpotential an die a-Ader gelegt wird. Diese Signalisierungselemente üben also eine Funktion bei der Sprachübertragung aus.

Als weiters Signalisierungselement der symmetrischen Signalisierung ist der Auslöseimpulsgenerator AG zu nennen, der über die Schalter a1 und a3 an die a- und b-Ader angelegt wird. Nach Eintreffen des Auslöseimpulses legt die Nebenstellenanlage das Überwachungspootential an die b-Ader. Für die Sprachübertragung spielt der Auslösimpulsgenerator keine Rolle.

Die Sprachverarbeitung erfolgt durch eine Einrichtung COF, an die die Sprachsignale über Schalter a2 sowie über einen Sprachübertrager T gelangen.

Wie die FIG 3 zeigt, werden sowohl die Signalisierungselemente R, WA; H, N und WB der unsymmetrischen Signalisierung als auch die Signalisierungselemente S, E, und AG der symmetrischen Signalisierung an eine durchgehende Schiene der a- und b-Adern angeschaltet. Um die Symmetrieforderungen bei der Sprachübertragung einhalten zu können, muß, wie schon dargelegt, die Anschaltung über Relais erfolgen. Die Stromquellen werden von Widerständen gebildet, die auch im Fehlerfall überlastungsfest sein müssen.

In der FIG 2 ist nun die Struktur des erfindungsgemäßen Durchwahlsatzes dargestellt. Es sind hierbei, soweit Übereinstimmungen bestehen, dieselben Bezugszeichen wie in FIG 3 verwendet.

Wie die FIG 2 zeigt, sind zwei Gruppen von Signalisierungselementen gebildet. Zu der einen Gruppe gehören die der unsymmetrischen Signalisierung dienenden Signalisierungselemente R, WA; H, N und WB, die bei der Sprachübertragung keine Funktionen erfüllen. Diese sind über elektronische Schalter b1 bis b5 an Abzweigungen a' und b' der Teilnehmerleitungsadern a und b der Teilnehmeranschlußleitung anschaltbar. Hinzu kommt der Auslöseimpulsgenerator, der zwar, wie dargelegt, ein Element der symmetrischen Signalisierung ist, jedoch im Zusammenhang mit der Sprachübertragung keine Funktion ausübt. Eine gleichzeitige Anschaltung an die Teilnehmerleitungsadern erfolgt über die Kontakte a3 eines Umschalterelais, womit sichergestellt ist, daß eine Leitungsadernanschaltung des Auslöseimpulsgenerators immer nur alternativ zu einer Anschaltung wenigstens eines der der unsymmetrischen Signalisierung dienenden Signalisierungselemente erfolgt.

Bestandteil der zweiten Gruppe sind die der symmetrischen Signalisierung dienenden Elemente E und S, die mittels der Kontakte a4 eines weiteren Umschalterelais an die Leitungsadernabzweigungen a'' und b'' anschaltbar sind.

In diese Leitungsadernabzweigungen a'' und b'' sind auch die Wicklungen des Sprachübertragers Ü eingefügt, über den die Sprachsignale der Einrichtung zur Sprachverarbeitung SICOFI zugeführt werden.

Die Gruppenanschaltung der beiden erwähnten Gruppen an die Adern a und b der Teilnehmeranschlußleitung, d.h. die Verbindung der Leitungsabzweigungen a' und b' bzw. a'' und b'' mit den Adern a und b erfolgt über die Kontakte a1 und a2 zweier Schalterelais.

Aufgrund der erfindungsgemäßen Struktur kann also die Anzahl der zur Anschaltung von Signalisierungselementen verwendeten Relais auf die die Kontakte a1 bis a4 umfassenden Relais reduziert werden, wogegen die Anschaltung der Signalisierungselemente der ersten Gruppe mit Ausnahme des Auslöseimpulsgenerators über elektronische Kontakte b1 bis b5 erfolgt, die Signalisierungselemente, soweit sie Stromquellen sind, können als elektronische Stromquellen realisiert sein und darüber hinaus besteht die Möglichkeit eines zentralisierten Überspannungs- und Überstromschutzes der elektronsichen Bauelemente dieses Durchwahlsatzes.

## Patentansprüche

1. Teilnehmeranschlußsatz für den Anschluß einer Fernsprechnebenstellenanlage an eine öffentliche Fernsprechvermittlungsstelle, über den eine Durchwahl von und zu der Nebenstellenanlage möglich ist und der für eine sowohl mit symmetrischen als auch mit unsymmetrischen Gleichstromleitungszeichen arbeitende Signalisierung zwischen Nebenstellenanlage und öffentlicher Vermittlungsstelle ausgelegt ist,
**dadurch gekennzeichnet**,
daß die im Zusammenhang mit der Signalisierung von unsymmetrischen Gleichstromsignalisierungszeichen stehenden und keine Funktion bei der Sprachübertragung ausübenden Signalisierungselemente (R, WA; H, N, WB) Bestandteil einer ersten Gruppe sind und die im Zusammenhang mit der Signalisierung mit symmetrischen Gleichstromsignalisierungskennzeichen stehenden Signalisierungselemente (E, S), soweit sie bei der Sprachübertragung eine Funktion ausüben, eine zweite Gruppe bilden, und daß die Signalisierungslemente als Gruppe jeweils mittels Relais (A1 bis A4) an die Adern (a, b) der mit der Nebenstellenanlage verbindenden Teilnehmeranschlußleitung anschaltbar sind.

2. Teilnehmeranschlußsatz nach Anspruch 1,
**dadurch gekennzeichnet**,
daß der Auslöseimpulsgenerator (AG) als ein Element der symmetrischen Signalisierung, das bei der Sprachübertragung jedoch keine Funktion erfüllt, der ersten Gruppe von Signalisierungselementen (R, WA; H, N, WB) zugeordnet ist, seine Anschaltung an die Adern (a, b) der Teilnehmeranschlußleitung innerhalb der Gruppe (a', b') jedoch nur alternativ zu wenigstens einer der übrigen Signalisierungselemente (R, WA; H, N, WB) erfolgt.

3. Teilnehmeranschlußschaltung nach Anspruch 2,
**dadurch gekennzeichnet**,
daß die Signalisierungselemente innerhalb der ersten Gruppe mittels elektronischer Schalter (b1 bis b5) an die Adern (a', b') der Teilnehmeranschlußleitung anschaltbar sind.

## Claims

1. Subscriber connection unit for connecting a telephone PBX to a public telephone exchange, via which unit direct dialling from and to the PBX is possible and which is designed for signalling between the PBX and public exchange in a fashion operating both with symmetrical and asymmetrical DC line characters, characterized in that the signalling elements (R, WA; H, N, WB) which are associated with the signalling of asymmetrical DC signalling characters and execute no function in voice transmission are a constituent of a first group, and the signalling elements (E, S) associated with the signalling with symmetrical DC signalling characters form a second group to the extent that they execute a function in voice transmission, and in that the signalling elements can be connected as a group by means of relays (A1 to A4) in each case to the wires (a, b) of the subscriber line connected to the PBX.

2. Subscriber connection unit according to Claim 1, characterized in that, as an element of symmetrical signalling which does not, however, fulfil any function in voice transmission, the release pulse generator (AG) is assigned to the first group of signalling elements (R, WA; H, N, WB), but it is connected to the wires (a, b) of the subscriber line within the group (a', b') only as an alternative to at least one of the remaining signalling elements (R, WA; H, N, WB).

3. Subscriber connection unit according to Claim 2, characterized in that the signalling elements within the first group can be connected to the wires (a', b') of the subscriber line by means of electronic switches (b1 to b5).

## Revendications

1. Module de raccordement d'abonné pour le raccordement d'un central téléphonique privé à un central téléphonique public, par l'intermédiaire duquel une sélection directe en provenance et à destination du central privé peut s'effectuer et qui est conçu pour une signalisation fonctionnant à la fois avec des signaux de ligne en courant continu symétrique et dissymétrique entre le central privé et le central public,
caractérisé en ce que
les éléments de signalisation (R, WA ; H, N, WB), qui concernent la signalisation par signaux de signalisation par courant continu symétriques et qui n'exercent pas de fonction lors de la transmission de la parole, font partie d'un premier groupe, et les éléments de signalisation (E, S) concernant la signalisation par signaux de signalisation par courant continu symétriques. dans la mesure où ils exercent une fonction lors de la transmission de la parole, forment un second groupe, et les éléments de signalisation peuvent être branchés en tant que groupe au moyen de relais (A1 à A4) aux fils (a, b) de la ligne de raccordement d'abonné reliant au central privé.

2. Module de raccordement d'abonné suivant la revendication 1,
caractérisé en ce que
le générateur AG d'impulsion de déclenchement est associé, en tant qu'élément de la signalisation symétrique, qui ne remplit cependant pas de fonction lors de la transmission de la parole, au premier groupe d'éléments de signalisation (R, WA ; H, N, WB), mais son branchement aux fils (a, b) de la ligne de raccordement d'abonné ne s'effectue dans le groupe (a', b') qu'en alternance avec au moins l'un des éléments de signalisation restants (R, WA ; H, N, WB).

3. Circuit de raccordement d'abonné suivant la revendication 2,
caractérisé en ce que
les éléments de signalisation peuvent être branchés dans le premier groupe au moyen d'interrupteurs électroniques (b1 à b5) aux fils (a', b') de la ligne de raccordement d'abonné.
